**Europäisches Patentamt**

**European Patent Office**

**Office européen des brevets**

(19)

(11) Publication number: **0 189 238**

**B1**

(12)

# EUROPEAN PATENT SPECIFICATION

(45) Date of publication of the patent specification: 02.08.89

(51) Int. Cl.⁴: **H 04 N 1/46**

(21) Application number: 86300005.5

(22) Date of filling: 02.01.86

(54) Image enhancement.

(30) Priority: 09.01.85 GB 8500494

(43) Date of publication of application: 30.07.86 Bulletin 86/31

(45) Publication of the grant of the patent: 02.08.89 Bulletin 89/31

(84) Designated Contracting States: DE GB

(56) References cited: EP-A-0 096 084

(73) Proprietor: **CROSFIELD ELECTRONICS LIMITED, De La Rue House 3/5 Burlington Gardens, London W1A 1DL (GB)**

(72) Inventor: **Stansfield, Peter William, 7 Holme Road, Hatfield Herts (GB)**
Inventor: **Reed, Alastair, 5 The Gables Linslade, Leighton Buzzard Bedfordshire, LU7 7PQ (GB)**

(74) Representative: **Skone James, Robert Edmund, GILL JENNINGS & EVERY 53- 64 Chancery Lane, London WC2A 1HN (GB)**

EP 0 189 238 B1

## Description

The invention relates to a method and apparatus for enhancing an image represented by analogue signals or digital data defining the content of one or more pluralitles of pixels constituting one or more colour separations.

In the field of printing, images are represented by one or more colour separations, such as cyan, magenta, yellow, and black. Where an image, typically a high resolution or "text" image, is to be included within a lower resolution or graphics image and the colour of the text image is such that one or more colour separations are required then, typically, a suitable gap is generated in those non-required colour separations, the gap corresponding in shape to the high resolution image.

Problems arise when the separations are registered since for various reasons such as paper stretch and mis-registration, the colour separation(s) providing the high resolution image do not exactly register the image with the corresponding gap on one or more of the other colour separations. This results in the generation of a white border around at least part of the image.

In the past, this problem has been solved by interposing a clear sheet between the colour separation or separations carrying the high resolution image and the contact print so that the high resolution image is slightly diffused and the generation of borders is prevented. This practice is technically known as "grip".

With the advent of modern imaging apparatus in which colour separations are generated using sets of laser beams it is desirable to deal with the misregistration problem during production of the separations.

In general, with this modern imaging apparatus, the application of grip has been relatively easy since the edges of features to be gripped are normally known to the imaging apparatus. An example of a known method is described in EP-A-0 096 084. However, we have recently developed a system described in EP-A-0 151 353 in which relatively high resolution features, such as text, are included within low resolution features and the location of the high resolution features is not easily determined by the imaging apparatus. In this case, it is the text in the image which is to be gripped.

In accordance with one aspect of the present invention, a method for enhancing an image represented by analogue signals or digital data defining the colour content of one or more pluralities of pixels constituting one or more colour separations comprises for at least one of the pluralities of pixels transforming the signals or data into the frequency domain so as automatically to locate edges of features in the image defined by non-zero order frequencies; multiplying the transformed signals or data with a predetermined position invariant operator; and transforming the multiplied signals or data back to the spatial domain, the transformed signals or data and the position invariant operator being such that multiplication of the non-zero order frequencies defining the edges causes negative or positive grip to be applied to the edges of features in the image.

When the image is represented by analogue signals, these may be optical signals which are passed through a suitable filter whose transmission characteristics correspond to the transform of a mask.

The invention is primarily concerned, however, with mages represented by digital data and the remainder of the specification will be concerned with that.

The transformation of the digital data representing the image into the frequency domain automatically locates the edges of features since these will be represented by relatively high frequency components. Thus, there is no necessity to determine the spatial location of such edges.

Although, in some limited circumstances, a one-dimensional transformation could be carried out on the data this would only locate edges of features running in one particular direction. It is therefore preferable if a two-dimensional transformation is carried out.

The transformation is preferably a Fourier, sine or cosine transformation although other transformations such as Hadamard, or Karhunen-Loeve transformations might be suitable.

The type of grip, negative or positive, depends upon the circumstances involved. In general, where text is involved, it will be required to apply positive grip to cause the edges of the features to grow. This will then enable the text characters to overlap the surrounding graphics image and prevent the occurrence of a border if misregistration of the colour separations should occur. In some circumstances, however, negative grip may be appropriate in which case edges of the features will be moved to cause the feature to shrink in size. The choice of positive or negative grip is determined by the desire that the appearance of a feature should be unchanged, hence for light text on a dark background the background is grown into the space. In order to achieve negative grip, the method further comprises inverting the transformed image data prior to multiplication with the predetermined position invariant operator. Furthermore, grip may be applied to low resolution (or graphics) images.

The position invariant operator defines in transform space a mask.

Preferably, where a relatively large image is to be enhanced, the digital data defining the image is divided into a plurality of smaller blocks of pixels, each of the steps of the method being carried out separately on each small block of pixels.

The memory limitations of conventional processors and the complex computations necessary to perform a two-dimensional transformation on large images means that it eases processing if the image is broken down into a number of small blocks. It is important to overlap the blocks, however, so that no block boundaries appear.

In accordance with a second aspect of the present invention, apparatus for enhancing an image represented by digital data defining the colour content of one or more pluralities of pixels constituting one or more colour separations comprises transformation means for transforming the digital data for at least one of the pluralities of pixels into the frequency domain so as automatically to locate edges of features in the image defined by non-zero order frequencies; a store for storing data defining a predetermined position invariant operator; multiplying means for multiplying the transformed data with the position invariant operator; and inverse transform means for transforming the multiplied data back to the spatial domain, the transformed data and the position invariant operator being such that multiplication of the non-zero order frequencies defining the edges causes negative or positive grip to be applied to the edges of features in the image.

Conveniently, the apparatus is provided by a suitably programmed computer. Furthermore, where a large number of pixels are to be transformed, the transforming means preferably comprises a fast Fourier transform means (FFT). The FFT may conveniently be defined by a computer programmed to carry out a FFT algorithm.

The shape of the mask may be, in the spatial domain, one of a continuous outline square, a solid square, a continuous outline circle, a solid circle, a continuous cross, a four point cross, and a five point square. Other shapes, particularly asymmetric shapes, may also be used. It should be appreciated, that the mask has no physical existence, its effect simply being represented by the position invariant operator. Preferably for grip the mask is a solid square or circle, but other shapes give special effects. For example a line gives a 3D effect i. e. perspective.

Typically, the apparatus will form part of scanning apparatus such as the Crosfield 860 system. The digital data may be generated at the same time as the colour separations are generated or alternatively, the digital data may have been previously generated and stored. Furthermore, the enhanced data may be stored or fed directly to the colour separation generating apparatus.

An example of a method and apparatus in accordance with the invention, will now be described with reference to the accompanying drawings, in which:

Figure 1 illustrates different forms of mask and the effect of positive grip using each mask;

Figures 2a, 2b and 2c illustrate part of a text image, a mask, and the gripped image in the spatial domain and the transform domain;

Figure 3 is a block diagram of apparatus for carrying out an example of the invention;

Figure 4 is a flow diagram illustrating the operation of a computer for carrying out an example of the invention; and,

Figure 5 illustrates examples of positive and negative grip produced by methods according to the invention.

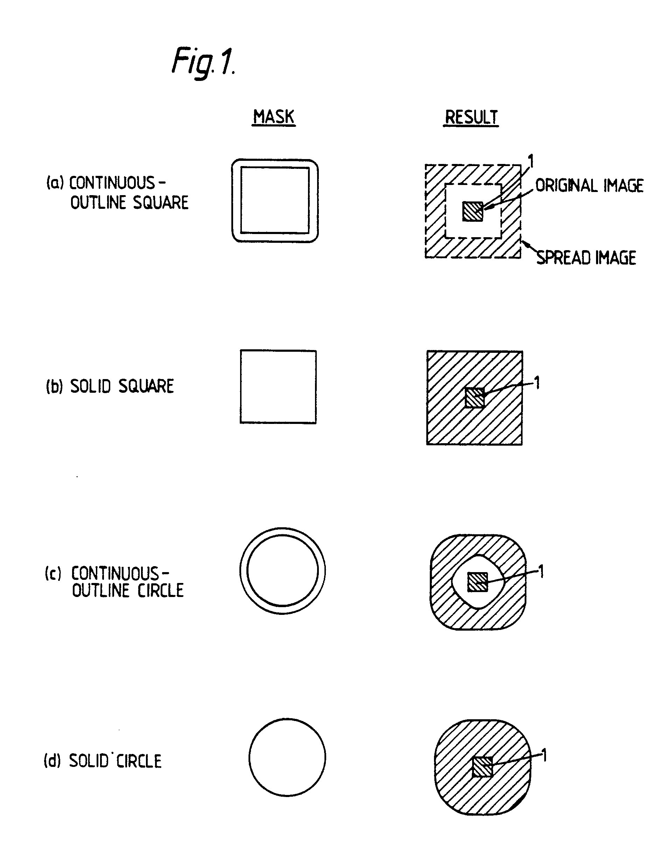

Figures 1a - 1d illustrate four different types of mask and the effect of applying the mask to a text image such as a square full stop 1. In each case, the outer boundary of the text feature has been moved outwards to enlarge the feature. This is an example of positive grip. In negative grip, the outer boundary will be moved inwardly to decrease the size of the image.

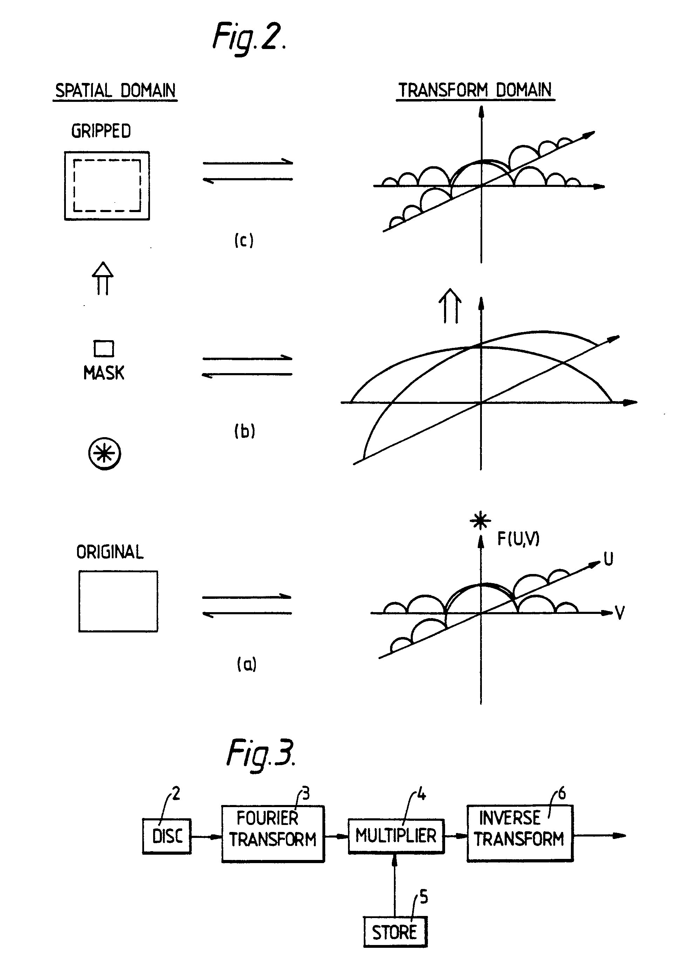

Figure 2a illustrates for one colour component a solid square at high resolution, such as part of a text image, in the spatial and Fourier transform domains. In this context, a high resolution image may have a density of about 810 thousand pixels per square inch. Grip can be applied to each colour of a graphic image or to the monochrome text image. The colour of each pixel in the image will be represented by digital data indicating the intensity of colour components such as cyan, magenta, yellow, and usually also black. Thus, each image is represented by three or four sets of digital data.

If the intensity of the one colour component is given by f(x, y) then the two dimensional Fourier transform is defined as:

$$F(u,v) = \int\int_{-\infty}^{\infty} f(x,y) \exp(-j2\pi(ux + vy)) \, dxdy$$

The graphical representation of the Fourier transform shown in Figure 2a illustrates how the colour component intensity has been broken down into a number of different frequencies. The zero order component corresponds to the average intensity of the entire image while the high order frequencies are needed to generate the edges of the text feature shown in Figure 2a. It will be seen therefore that the edge of the text feature has effectively been separated out from other features in the image by carrying out the Fourier transform.

For clarity, the part of the Fourier transform corresponding to non-zero values of both u and v has been omitted.

The next stage in the method is to multiply the Fourier transform F(u, v) by a position invariant operator corresponding to a desired mask. The position invariant operator can be determined by selecting the appropriate mask in the spatial domain as illustrated in Figure 2b and then transforming the selected mask into the frequency domain. The two Fourier transforms are then multiplied together and the resultant function (Figure 2c) is inversely transformed back into the spatial domain. The resultant affect on the text feature is that the edge of the text feature will have been moved outwardly to increase the size of the text feature.

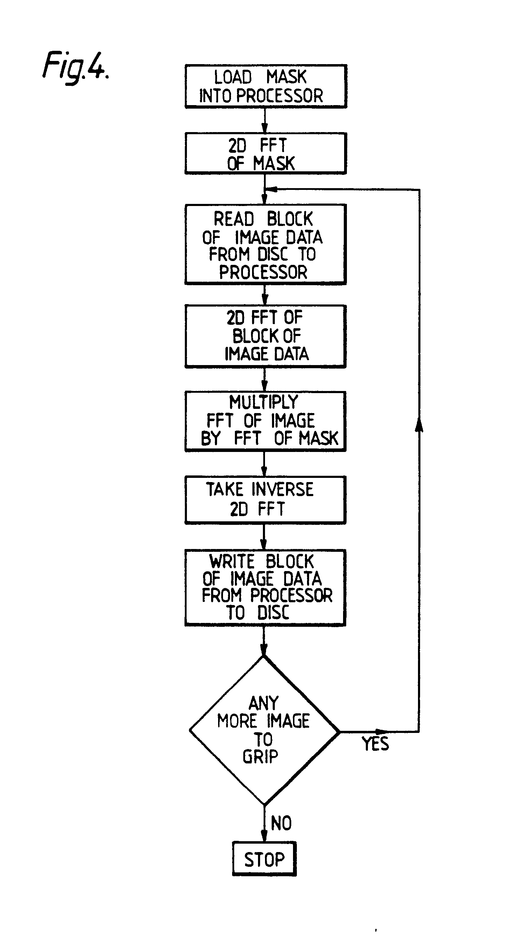

Figure 3 illustrates in block diagram form a hardware version of apparatus for carrying out the invention. This may be incorporated into our Crosfield 860 system. Alternatively the hardware components can be realised in software form in a suitable programmed computer operating in accordance with the flow diagram of Figure 4.

The apparatus comprises a disc store 2 on which is stored digital data representing the intensity of each of three or four colour components for each pixel of an original text or high resolution image. This data may have been generated electronically or result from a conventional scanning system. In turn, the data for each colour component is fed to a Fast Fourier transform circuit 3 which carries out a two-dimensional Fourier transform on the data the resultant transformed data being fed to a multiplier 4. A store 5 is provided containing data representing the Fourier transform of a desired mask. The multiplier 4 multiplies the Fourier transform from the circuit 3 with the transformed mask from the store 5 and the resultant data is fed to an inverse transform circuit 6 which carries out an inverse two-dimensional Fast Fourier transform. The data from the inverse transform circuit 6 is then fed to further processing apparatus or a store as desired.

The Fourier transform circuit 3 and the inverse transform circuit 6 carry out fast Fourier and inverse Fourier transforms on the data since this requires far fewer computations than in a conventional Fourier transform.

Usually, the invention will be realised in a suitably programmed microcomputer. The operation of such a microcomputer is illustrated by the flow diagram shown in Figure 4. Initially, a mask defined spatially is loaded into the microcomputer and is then transformed into the frequency domain by the application of a two-dimensional Fast Fourier transform algorithm. A block of image data comprising a plurality of pixels defined in terms of the intensities of a colour component is then read into the microcomputer and the Fast Fourier transform algorithm is applied to that data. The transformed image data is then multiplied by the transformed mask. The resultant multiplied data is then transformed back into the spatial domain by applying an inverse Fast Fourier transform algorithm. The retransformed data is then written to a store such as a disc or directly fed to an output scanner. This series of steps is then repeated for each block of image data until the complete colour separation has been gripped. This may be repeated using the same or a different shaped mask for the other colour separations of the image where a coloured image is concerned.

By subtracting an original from a grown or shrunken image, casing can be made which fits inside or outside text.

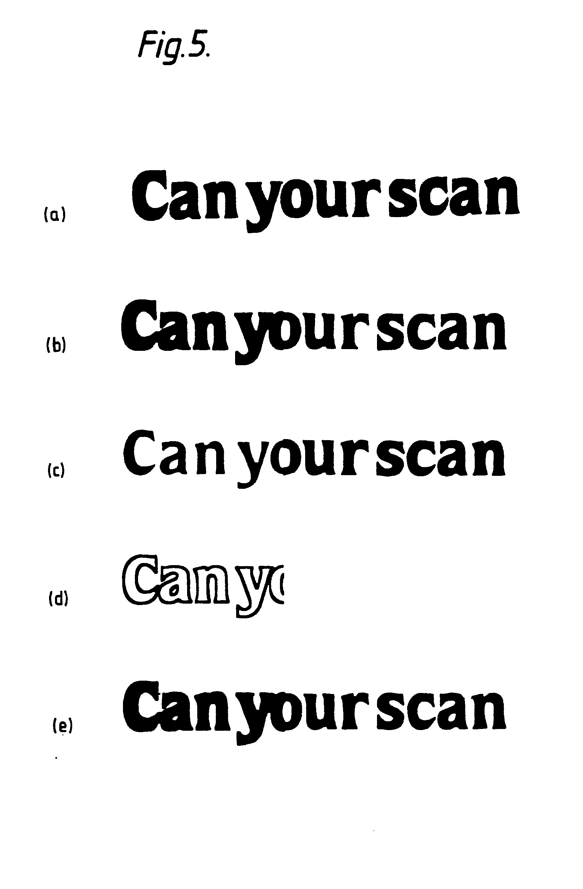

Figure 5a illustrates an original line of text while Figure 5b illustrates the same line of text after the application of positive grip in which the text characters have been grown by 11 text pixels using a method according to the invention. Figure 5c illustrates the application of a similar degree of negative grip in which the text symbols have been shrunk by 11 text pixels. Figure 5d illustrates part of the results of substracting the shrunk version of Figure 5c from the grown version of Figure 5b to generate outline characters. Figure 5e is similar to Figure 5b but with a growth of 12 text pixels.

## Claims

1. A method for enhancing an image represented by analogue signals or digital data defining the colour content of one or more pluralities of pixels constituting one or more colour separations, the method comprising for at least one of the pluralities of pixels transforming the signals or data into the frequency domain so as automatically to locate edges of features in the image defined by non-zero order frequencies; multiplying the transformed signals or data with a predetermined position invariant operator; and transforming the multiplied signals or data back to the spatial domain, the transformed signals or data and the position invariant operator being such that multiplication of the non-zero order frequencies defining the edges causes negative or positive grip to be applied to the edges of features in the image.

2. A method according to claim 1, wherein the image is represented by optical signals which are passed through a suitable filter whose transmission characteristic corresponds to the transform of a mask.

3. A method according to claim 1 in which a two dimensional transformation is carried out on digital data representing the image.

4. A method according to claim 1 or claim 3, in which digital data defining the image is divided into a plurality of smaller blocks of pixels, each of the steps of the method being carried out separately on each small block of pixels.

5. Apparatus for enhancing an image represented by digital data defining the colour content of one or more pluralities of pixels constituting one or more colour separations, the apparatus comprising transformation means (3) for transforming the digital data for at least one of the pluralities of pixels into the frequency domain so as automatically to locate edges of features in the image defined by non-zero order frequencies; a store (5) for storing data defining a predetermined position invariant operator; multiplying means (4) for multiplying the transformed data with the position invariant operator; and inverse transform means (6) for transforming the multiplied data back to the spatial domain, the transformed data and the position invariant operator being such that multiplication of the non-zero order frequencies defining the edges causes negative or positive grip to be applied to the edges of features in the image.

6. Apparatus according to claim 5, the apparatus comprising a suitably programmed computer.

7. Apparatus according to claim 5 or claim 6, wherein the transforming means (3) comprises a fast Fourier transform means.

## Patentansprüche

1. Verfahren zur Verbesserung einer Abbildung, die durch Analogsignale oder Digitaldaten dargestellt wird, die den Farbgehalt einer oder mehrerer Bildpunktmengen definieren, die eine oder mehrere Farbtrennungen ausmachen, wobei das Verfahren für mindestens eine der Bildpunktmengen darin besteht, die Signale oder Daten in den Frequenzbereich zu transformieren, um in der Abbildung die durch Befehlsfrequenzen ungleich Null definierten Kanten von Merkmalen zu lokalisieren, die transformierten Signale oder Daten mit einem vorherbestimmten positionsinvarianten Operator zu multiplizieren; und die multiplizierten Signale oder Daten zurück in den räumlichen Bereich zu transformieren, wobei die transformierten Signale oder Daten und der positionsinvariante Operator dergestalt sind, daß die Multiplikation von Befehlsfrequenzen ungleich Null, die die Kanten definieren, eine positive oder negative Verschiebung (grip) der Kanten der Merkmale in der Abbildung bewirken.

2. Verfahren nach Anspruch 1, bei dem die Abbildung durch optische Signale dargestellt wird, die durch einen geeigneten Filter geleitet werden, dessen Transmissionseigenschaft der Umwandlung durch eine Blende entspricht.

3. Verfahren nach Anspruch 1, bei dem eine zweidimensionale Transformation mit Digitaldaten durchgeführt wird, die die Abbildung darstellen.

4. Verfahren nach Anspruch 1 oder Anspruch 3, bei dem die Digitaldaten, die die Abbildung darstellen, in mehrere kleinere Bildpunktblöcke aufgetrennt werden, wobei jeder Verfahrensschritt separat für jeden kleinen Bildpunktblock ausgeführt wird.

5. Vorrichtung zur Verbesserung einer Abbildung, die durch Digitaldaten dargestellt wird, die den Farbgehalt einer oder mehrerer Bildpunktmengen definieren, die eine oder mehrere Farbauftrennungen bilden, mit Transformationsvorrichtungen (3) zur Transformation der Digitaldaten mindestens einer der Bildpunktmengen in den Frequenzbereich, um automatisch die Kanten von Merkmalen in der Abbildung definiert durch Befehlsfrequenzen ungleich Null zu lokalisieren; einen Speicher (5) zur Speicherung der Daten, die einen vorherbestimmten positionsinvarianten Operator definieren; Vervielfachungsvorrichtungen (4) zur Multiplikation der transformierten Daten mit dem positionsinvarianten Operator; und umgekehrte Transformationsvorrichtungen (6) zur Transformation der multiplizierten Daten zurück in den räumlichen Bereich, wobei die transformierten Daten und der positionsinvariante Operator dergestalt sind, daß die Multiplikation der Befehlsfrequenzen ungleich Null, die die Kanten definieren, eine negative oder positive Verschiebung (grip) der Kanten der Merkmale in der Abbildung bewirkt.

6. Vorrichtung nach Anspruch 5, die einen entsprechend programmierten Computer enthält.

7. Vorrichtung nach Anspruch 5 oder 6, bei der die Transformationsvorrichtung (3) eine schnelle Fourier-Transformationsvorrichtung ist.

## Revendications

1. Méthode d'amélioration d'une image représentée par des signaux analogiques ou des données numériques définissant la teneur en couleurs d'une ou de plusieurs multitudes(s) de pixels se composant d'une ou de plusieurs sélection(s) de couleurs, cette méthode pour tout au moins une des multitudes de pixels englobant la transformation des signaux ou données dans le domaine de fréquences afin de pouvoir automatiquement repérer les limites des caractéristiques de l'image définies par des fréquences d'ordre non nul; la multiplication des signaux ou données transformés au moyen d'un opérateur invariant de position prédéterminée; et la transformation des signaux ou données multipliés dans le domaine spatial, les signaux ou données transformés ainsi que l'opérateur invariant de position étant tels que la multiplication des fréquences d'ordre non nul de définition des limites provoque l'application d'une prise négative ou positive sur les limites des caractéristiques de l'image.

2. Méthode selon la revendication 1, où l'image est représentée par des signaux optiques qui passent à travers un filtre approprié dont la caractéristique de transmission correspond à la transformation d'un masque.

3. Méthode selon la revendication 1 où une transformation bidimensionnelle est exécutée sur des données numériques représentant l'image.

4. Méthode selon la revendication 1 ou la revendication 3, où les données numériques définissant l'image sont divisées en une multitude de petits blocs de pixels, chaque étape de la méthode étant exécutée séparément sur chaque petit bloc de pixels.

5. Appareil d'amélioration d'une image représentée par des données numériques définissant la teneur en couleurs d'une ou de plusieurs multitude(s) de pixels se composant d'une ou de plusieurs sélection(s) de couleurs, cet appareil comportant un dispositif transformateur (3) visant à transformer les données numériques pour tout au moins une des multitudes de pixels dans le domaine de fréquences afin de pouvoir automatiquement repérer les limites des caractéristiques de l'image définies par des fréquences d'ordre non nul; une mémoire (5) d'enregistrement des données définissant un opérateur invariant de position prédéterminée; un dispositif de multiplication (4) des données transformées au moyen de l'opérateur invariant de position; et un dispositif de transformation inverse (6) visant à transformer les données multipliées en retour dans le domaine spatial, les données transformées ainsi que l'opérateur invariant de position étant tels que la multiplication des fréquences d'ordre non nul de définition des limites provoque l'application d'une prise négative ou positive sur les limites des caractéristiques de l'image.

6. Appareil selon la revendication 5, où l'appareil comporte un ordinateur à programmation adéquate.

7. Appareil selon la revendication 5 ou la revendication 6, où le dispositif de transformation (3) comporte un transformateur Fourier rapide.

# Fig.1.

(a) CONTINUOUS -
    OUTLINE SQUARE

ORIGINAL IMAGE

SPREAD IMAGE

(b) SOLID SQUARE

(c) CONTINUOUS -
    OUTLINE CIRCLE

(d) SOLID CIRCLE

# Fig.2.

SPATIAL DOMAIN

TRANSFORM DOMAIN

GRIPPED

(c)

⇑

MASK

(b)

⊛

ORIGINAL

(a)

F(U,V)

U

V

# Fig.3.

DISC 2 → FOURIER TRANSFORM 3 → MULTIPLIER 4 → INVERSE TRANSFORM 6 →

STORE 5

*Fig.4.*

```
        ┌─────────────────┐
        │  LOAD  MASK     │
        │ INTO PROCESSOR  │
        └────────┬────────┘
                 │
        ┌────────▼────────┐
        │   2D  FFT       │
        │   OF MASK       │
        └────────┬────────┘
                 │        ◄──────────────────┐
        ┌────────▼────────┐                  │
        │  READ  BLOCK    │                  │
        │  OF  IMAGE DATA │                  │
        │  FROM DISC  TO  │                  │
        │  PROCESSOR      │                  │
        └────────┬────────┘                  │
                 │                           │
        ┌────────▼────────┐                  │
        │  2D FFT OF      │                  │
        │  BLOCK OF       │                  │
        │  IMAGE DATA     │                  │
        └────────┬────────┘                  │
                 │                           │
        ┌────────▼────────┐                  │
        │  MULTIPLY       │                  │
        │  FFT  OF IMAGE  │                  │
        │  BY  FFT  OF MASK│                 │
        └────────┬────────┘                  │
                 │                           │
        ┌────────▼────────┐                  │
        │  TAKE INVERSE   │                  │
        │  2D  FFT        │                  │
        └────────┬────────┘                  │
                 │                           │
        ┌────────▼────────┐                  │
        │  WRITE  BLOCK   │                  │
        │  OF IMAGE DATA  │                  │
        │  FROM PROCESSOR │                  │
        │  TO  DISC       │                  │
        └────────┬────────┘                  │
                 │                           │
              ╱──▼──╲                        │
             ╱  ANY  ╲                       │
            ╱ MORE IMAGE╲    YES             │
            ╲    TO     ╱────────────────────┘
             ╲  GRIP   ╱
              ╲───┬───╱
                  │ NO
             ┌────▼───┐
             │  STOP  │
             └────────┘
```

*Fig. 5.*

(a) **Can your scan**

(b) **Can your scan**

(c) **Can your scan**

(d) **Can yo**

(e) **Can your scan**

7